# EUROPEAN PATENT APPLICATION

(11) **EP 1 408 689 A1**
(43) Date of publication of application: **14.04.2004**
(21) Application number: 02733304.6
(22) Date of filing: 05.06.2002
(51) Int. Cl.: H04N 5/92, H04N 5/783, G11B 20/10, G11B 20/12

(54) **IMAGE RECORDING DEVICE AND METHOD**

(30) Priority: 18.06.2001 JP 2001183316
(71) Applicant: Sony Corporation, Tokyo 141-0001 (JP)
(72) Inventor: MAITA, Soichiro, c/o SONY CORPORATION, Shinagawa-ku, Tokyo 141-0001 (JP)
(74) Representative: Pilch, Adam John Michael
(86) International application number: PCT/JP2002/005526
(87) International publication number: WO 2002/104017

(57) **Abstract**

The present invention relates to an image recording apparatus arranged for performing variable-speed reproducing processing easily without controlling timing. Data-for-reproducing 111c and 111d to be recorded on a track 11 are positioned above and below separately. Image data for normal reproducing is stored in one of them as data area for normal reproducing. Data for variable-speed reproducing is recorded in the other as a data area for variable-speed reproducing. Here, the image data for normal reproducing is continuously recorded in each of the track 11. On the other hand, the same image data for variable-speed reproducing is recorded in every 15 tracks when the variable-speed reproducing speed is a maximum of 15X speed. The present invention can be applied to an image recording/reproducing apparatus.

## Description

### Technical Field

The present invention relates to an image recording apparatus and method and, in particular, to an image recording apparatus and method, which can perform variable-speed reproducing processing without controlling timing for the variable-speed reproducing processing.

### Background Art

In general, a so-called variable-speed reproducing (double speed reproducing or quadruple speed reproducing) has been widely spread. According to the technology, image data recorded on a magnetic tape may be reproduced at double reproducing speed, quadruple reproducing speed or the like as a normal reproducing speed.

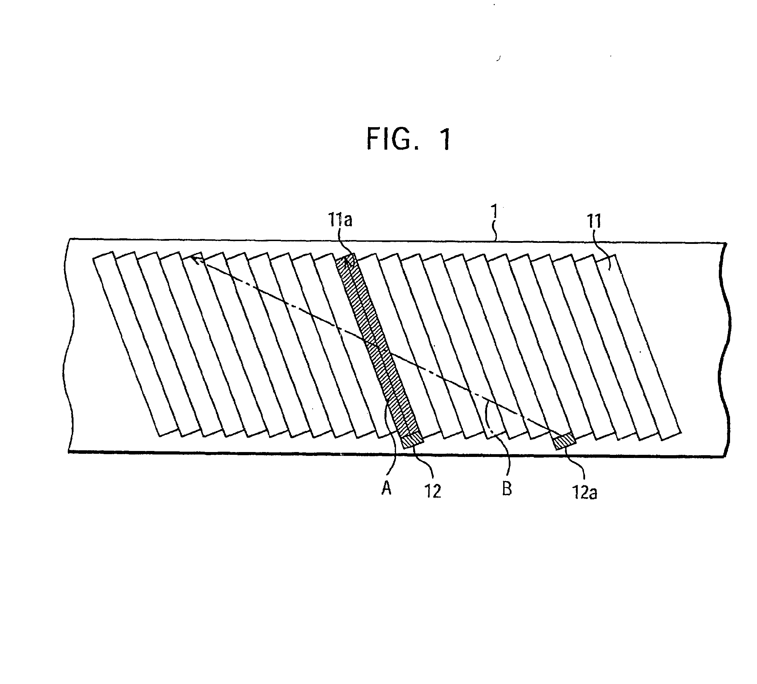

Fig. 1 shows a reading direction of a head 12 for reading data recorded on each track 11 on a magnetic tape 1. For example, when data at a track 11a is reproduced at a normal reproducing speed (in a case of normal reproducing), the head 12 sequentially reads data recorded on the track 11a by moving in a direction indicated by a solid line arrow A. On the other hand, when, for example, data is reproduced at 15X speed, the magnetic tape 1 is advanced at the 15X speed as the normal reproducing speed. Therefore, the head 12a traverses and straddles 15 of the tracks 11 at one scan by moving in a direction indicated by a one-point dashed line arrow B. Then, the head 12a reads data recorded on the track 11a. As a result, only the part (an amount equal to 1/15 of the track 11a) of the data recorded on the track 11a can be reproduced. Therefore, the recorded image cannot be reconstructed accurately.

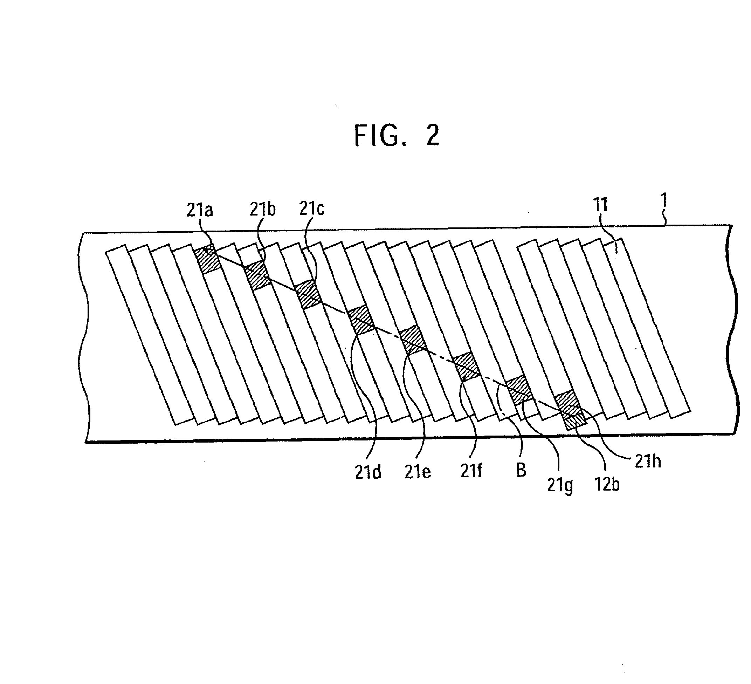

In order to overcome the problem, according to Japanese Unexamined Patent Application Publication No. 2000-244863, data, which can be reproduced at a normal reproducing speed, and data corresponding to the data on the track 11a as shown in Fig. 2, are recorded by dividing and arranging both of the data on a path indicated by the arrow B to be scanned by the head 12 for variable-speed reproducing, as shown by data 21a to 21h for variable-speed reproducing. Thus, the data 21h to 21a for variable-speed reproducing arranged in the path indicated by the arrow B can be read when the head 12b moves at the 15X speed. More specifically, two kinds of head 12 having different azimuth angles are provided in a drum, not shown. Therefore, the tracks 11 are recorded by the heads 12 having the different azimuth angles from each other. As shown in Fig. 2, data, which can be read by one of the heads 12, is placed on every other track.

However, in the construction, positions where the data 21a to 21h for variable-speed reproducing must be scanned accurately when recording. The heads 12 must record information indicating in which timing the data for variable-speed reproducing on the magnetic tape 1 is started to scan. Therefore, each of the heads 12 must include a mechanism for recording control information and time information and a control mechanism for reading the control information and the time information when reproducing at a variable speed and for operating based on the read information. Thus, the size of apparatus is increased disadvantageously. Also, control information and time information for reproducing the data 21 for variable-speed reproducing must be recorded in information on the magnetic tape 1 repeatedly. As a result, an amount of data to be recorded is increased disadvantageously.

### Disclosure of Invention

The present invention was made in view of the conditions and for achieving variable-speed reproducing processing without controlling reading timing in the variable-speed reproducing processing.

An image recording apparatus according to the present invention includes data converting means for variable-speed reproducing for converting image data to be used for variable-speed reproducing of the image data to data for variable-speed reproducing, storage means for storing data for variable-speed reproducing, which is converted by the data converting means for variable-speed reproducing, reading means for sequentially reading data for variable-speed reproducing, which is stored by the storage means, by a predetermined unit, and recording means for repeatedly recording data for variable-speed reproducing, which is sequentially read by the reading means, at a corresponding position of a predetermined number of tracks on the recording medium.

The image data may be image data compressed in MPEG2 method.

Data converting means for variable-speed reproducing may only convert I-picture image data of the image data to data for variable speed reproducing.

The data converting means for variable-speed reproducing may convert I-picture image data of the image data to be used for variable-speed reproducing, which is compressed in the MPEG 2 method, to data for variable-speed reproducing including plural sync blocks corresponding to the data length.

The recording means may repeatedly record data for variable-speed reproducing read by the reading means by the predetermined unit at a corresponding position of a predetermined number of tracks on the recording medium in accordance with the speed rate of running speeds of the recording medium in the variable-speed reproducing mode and in the normal reproducing mode.

An image recording method according to the present invention includes a data converting step for variable-speed reproducing for converting image data to be used for variable-speed reproducing of the image data to data for variable-speed reproducing, a storage step for storing data for variable-speed reproducing, which is converted by the processing at the data converting step for variable-speed reproducing, a reading step for sequentially reading data for variable-speed reproducing, which is stored by the processing at the storage step, by a predetermined unit, and a recording step for repeatedly recording data for variable-speed reproducing, which is sequentially read by the processing at the reading step, by a predetermined unit at a corresponding position of a predetermined number of tracks on the recording medium.

A program in a first program storage medium according to the present invention includes a data converting control step for variable-speed reproducing for controlling to convert image data to be used for variable-speed reproducing of the image data to data for variable-speed reproducing, a storage control step for controlling to store data for variable-speed reproducing, which is converted by the processing at the data converting control step for variable-speed reproducing, a reading control step for controlling to sequentially read data for variable-speed reproducing, which is stored by the storage control step, by a predetermined unit, and a recording control step for controlling to repeatedly record data for variable-speed reproducing, which is sequentially read by the processing at the reading control step, at a corresponding position of a predetermined number of tracks on the recording medium.

A first program causes to perform a data converting control step for variable-speed reproducing for controlling to convert image data to be used for variable-speed reproducing of the image data to data for variable-speed reproducing, a storage control step for controlling to store data for variable-speed reproducing, which is converted by the processing at the data converting step for variable-speed reproducing, a reading control step for controlling to sequentially read data for variable-speed reproducing, which is stored by the processing at the storage control step, by a predetermined unit, and a recording control step for controlling to repeatedly record data for variable-speed reproducing, which is sequentially read by the processing at the reading control step, at a corresponding position of a predetermined number of tracks on the recording medium.

An image reproducing apparatus includes reading means for straddling plural tracks and for reading the data for variable-speed reproducing, which is repeatedly recorded by a predetermined unit at a corresponding position of a predetermined number of tracks on the recording medium in a variable-speed reproducing mode, an image-for-variable-speed-reproducing creating means for creating an image for variable-speed reproducing from the data for variable-speed reproducing by the predetermined unit, which is read by the reading means, and a data-for-normal-reproducing creating means for creating image data, which can be normally reproduced, from the data for variable-speed reproducing, which is read by the reading means.

The image data may be image data compressed in MPEG2 method.

The data for variable-speed reproducing can be obtained by converting I-picture image data to be used for variable-speed reproducing of the image data to a plural sync block. The image-for-variable-speed-reproducing creating means creates the I-picture from the sync blocks of the data for variable-speed reproducing, which is read by the reading means, and creates an image for variable-speed reproducing from the I-picture.

A copying means may be further provided for copying and creating the I-picture as B-picture or P-picture. The image-for-variable-speed-reproducing creating means can create the I-picture from the sync blocks of the data for variable-speed reproducing, which is read by the reading means and may create image data, which can be normally reproduced, at predetermined time intervals from the I-picture and the B-picture or P-picture copied by the copying means.

The data-for-normal-reproducing creating means may create image data, which can be reproduced at a normal speed, by newly adding time information and/or control information.

An image reproducing method according to the present invention includes a reading step for straddling plural tracks and for reading the data for variable-speed reproducing, which is repeatedly recorded by a predetermined unit at a corresponding position of a predetermined number of tracks on the recording medium in a variable-speed reproducing mode, an image-for-variable-speed-reproducing creating step for creating an image for variable-speed reproducing from the data for variable-speed reproducing by the predetermined unit, which is read by the processing at the reading step, and a data-for-normal-reproducing creating step for creating image data, which can be reproduced at a normal speed, from the data for variable-speed reproducing, which is read by the processing at the reading step.

A program in a second program storage medium according to the present invention includes a reading control step for controlling to straddle plural tracks and to read the data for variable-speed reproducing, which is repeatedly recorded by a predetermined unit at a corresponding position of a predetermined number of tracks on the recording medium in a variable-speed reproducing mode, an image-for-variable-speed-reproducing creating control step for controlling to create an image for variable-speed reproducing from the data for variable-speed reproducing by the predetermined unit, which is read by the processing at the reading control step, and a normally-reproducable-data creating control step for controlling to create image data, which can be normally reproduced, from the data for variable-speed reproducing, which is read by the processing at the reading control step.

A second program according to the present invention causes to perform a reading control step for controlling to straddle plural tracks and to read the data for variable-speed reproducing, which is repeatedly recorded by a predetermined unit at a corresponding position of a predetermined number of tracks on the recording medium in a variable-speed reproducing mode, an image-for-variable-speed-reproducing creating control step for controlling to create an image for variable-speed reproducing from the data for variable-speed reproducing by the predetermined unit, which is read by the processing at the reading control step, and a normally-reproducable-data creating control step for controlling to create image data, which can be reproduced at a normal speed, from the data for variable-speed reproducing, which is read by the processing at the reading control step.

A magnetic tape according to the present invention includes an image-data-for-normal-reproducing recording area for storing image data for normal reproducing of the image data at a corresponding position of each track, and an image-data-for-variable-speed-reproducing recording area for storing image data for variable-speed reproducing of the image data at a corresponding position of each track. The image-data-for-normal-reproducing recording area and the image-data-for-variable-speed-reproducing recording area are positioned such that the track can be divided from the both ends in predetermined proportions. Image data for normal reproducing is sequentially recorded at a corresponding position of the track in the image-data-for-normal-reproducing recording area. Image data for variable-speed reproducing is repeatedly recorded at a corresponding position of a predetermined number of tracks in the image-data-for-variable-speed-reproducing recording area.

According to an image recording apparatus, method and program of the present invention, image data to be used for variable-speed reproducing of image data is converted to data for variable-speed reproducing. The converted data for variable-speed reproducing is stored, and the stored data for variable-speed reproducing is sequentially read by a predetermined unit. The sequentially read data for variable-speed reproducing is repeatedly recorded at a corresponding position of a predetermined number of tracks on a recording medium by a predetermined unit.

According to an image reproducing apparatus, method and program of the present invention, data for variable-speed reproducing, which is repeatedly recorded by a predetermined unit at a corresponding position of a predetermined number of tracks on a recording medium, is read by straddling plural tracks in a variable-speed reproducing mode. An image for variable-speed reproducing is created from the data for variable-speed reproducing read by the predetermined unit. Normally-reproducable image data is created from the read data for variable-speed reproducing.

According to a magnetic tape of the present invention, image data for normal reproducing of image data is recorded on an image-data-for-normal-reproducing recording area at a corresponding position of each track. Image data for variable-speed reproducing of image data is recorded on an image-data-for-variable-speed-reproducing recording area at a corresponding position of each track. The image-data-for-normal-reproducing recording area and the image-data-for-variable-speed-reproducing recording area are positioned such that the track can be divided from the both ends in predetermined proportions. Image data for normal reproducing is sequentially recorded at a corresponding position of the track in the image-data-for-normal-reproducing recording area. Image data for variable-speed reproducing is repeatedly recorded at a corresponding position of a predetermined number of tracks in the image-data-for-variable-speed-reproducing recording area.

### Brief Description of the Drawings

Fig. 1 is a diagram showing an example of image data recorded on a magnetic tape by a conventional image recording apparatus;
Fig. 2 is a diagram showing an example of image data for variable-speed reproducing, which is recorded on a magnetic tape by a conventional image recording apparatus;
Fig. 3 is a block diagram showing a construction of one embodiment of an image recording/reproducing apparatus according to the present invention;
Fig. 4 is a diagram for explaining a picture structure in MPEG;
Fig. 5 is a diagram for explaining a predictive coding for each kind of picture in MPEG;
Fig. 6 is a diagram for explaining a construction of a sync block of image data for normal reproducing;
Fig. 7 is a diagram for explaining a construction of a sync block of image data for variable-speed reproducing;
Fig. 8 is a flowchart for explaining recording processing;
Fig. 9 is a diagram showing tracks on which conventional image data is recorded;
Fig. 10 is a diagram showing tracks on which image data for normal reproducing and image data for variable-speed reproducing according to the present invention are recorded;
Fig. 11 is a flowchart for explaining normal reproducing processing;
Fig. 12 is a flowchart for explaining variable-speed reproducing processing; and
Fig. 13 is a diagram for explaining a program storage medium.

### Best Mode for Carrying Out the Invention

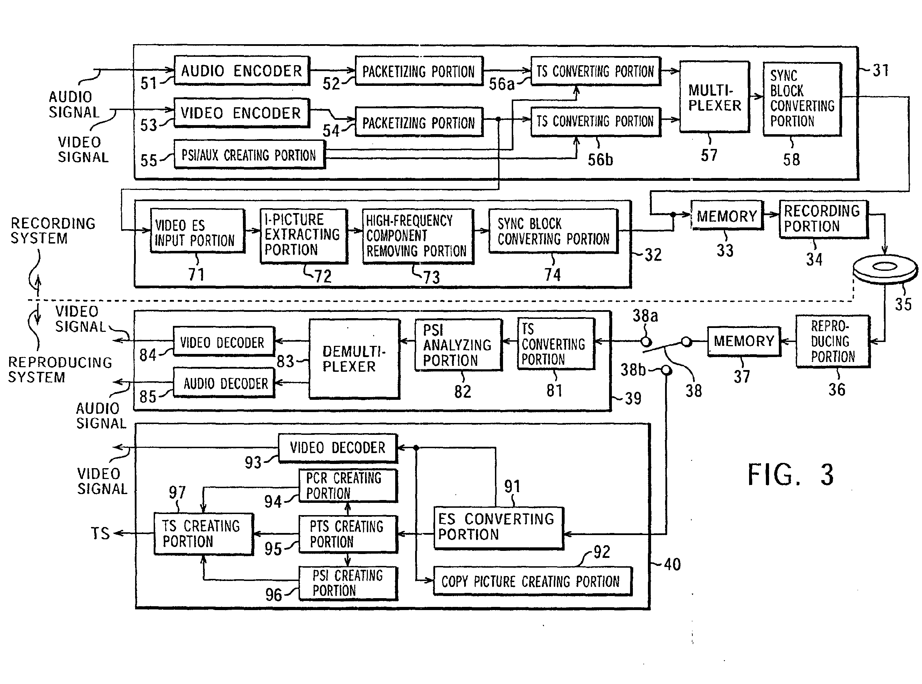

Fig. 3 is a diagram showing a construction of one embodiment of an image recording/reproducing apparatus according to the present invention. The image recording/reproducing apparatus records on a recording medium 35 video signals (video bit streams) and audio signals (audio bit streams) compressed to data in MPEG (Moving Picture Experts Group) 2 method. Furthermore, the image recording/reproducing apparatus reads data recorded on the recording medium 35 and generates and outputs original video signals and audio signals compressed in MPEG 2 method.

First of all, a record system will be described. An image data encoding portion 31 for normal reproducing encodes audio signals and/or video signals input from a microphone and/or an imaging device, not shown, respectively, and creates an elementary stream (ES). Then, the image data encoding portion 31 for normal reproducing converts the ES to a packetized elementary stream (PES) and creates a transport stream (TS). After that, a sync block for reproducing an image at a normal reproducing speed based on the TS is created and is output to a memory 33. Furthermore, the video ES is output to a picture encoding portion 32 for variable-speed reproducing.

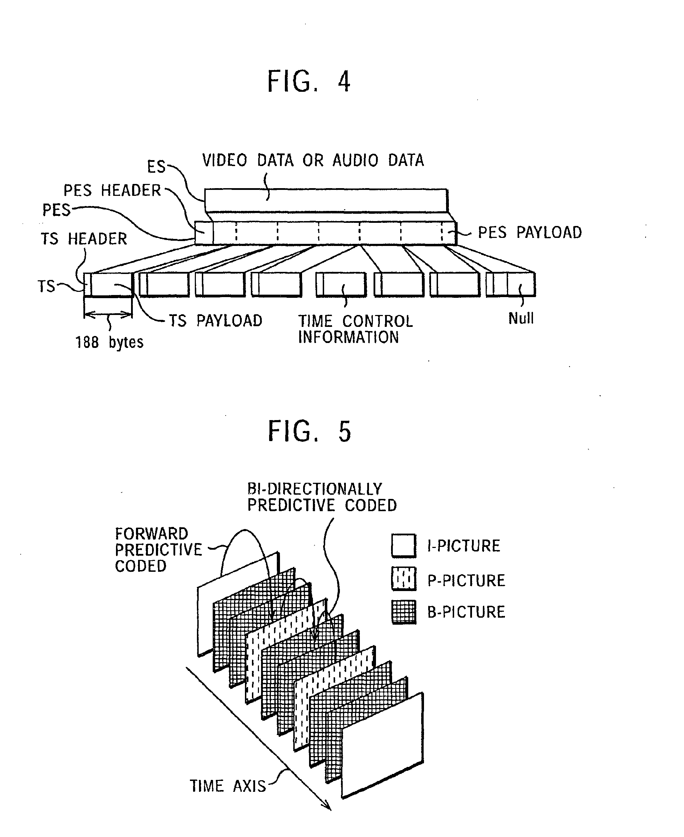

Here, "ES" refers to a stream including encoded video data and audio data, as shown in Fig. 4. The "PES" refers to a stream created by providing a PES header to an ES and packetizing the ES in a variable length. The PES includes a PES header and a PES payload. The PES header includes a PTS (picture time stamp). The PES payload includes ES information. Furthermore, a TS packet is created by packetizing the PES in a fixed length of 188 bytes. The TS packet includes a TS header and a TS payload. The TS header includes different kinds of control information. The TS payload includes PES data. Also, the TS packet may be a specific packet for time and control information (timing information for encoding, which will be described later, and the other control information). The TS packet has a fixed length. Therefore, the data length may be adjusted by inserting Null (zero (0) data) as required for some PES lengths. The TS is a data stream including the TS packet.

In the description hereinafter, an image to be reproduced at a normal reproducing speed is called "image for normal reproducing", while an image to be reproduced at double speed, quadruple speed or the like is called "image for variable-speed reproducing".

An audio encoder 51 of the image data encoding portion 31 for normal reproducing encodes audio signals input from a microphone, for example, not shown. Then, the audio encoder 51 creates an audio ES and outputs to a packetizing portion 52. The packetizing portion 52 packetizes the input audio ES, creates an audio PES and outputs to a TS converting portion 56a.

The video encoder 53 encodes video signals imaged by an imaging device, not shown, creates a video ES and outputs to the packetizing portion 54 and the image data encoding portion 32 for variable-speed reproducing. The packetizing portion 54 packetizes the input video ES, creates a video PES and outputs to a TS converting portion 56b and the image data encoding portion 32 for variable-speed reproducing.

Program specific information (PSI)/auxiliary information (AUX) creating portion 55 creates and outputs, to the TS converting portions 56a and 56b, PSI indicating a relationship with the ES, timing information for encoding video signals and audio signals, and the other control information. The timing information is required for constructing a TS of video signals and audio signals. In the following description, the timing information and the other control information for recording is called PSI/Aux information.

The TS converting portions 56a and 56b create and output to a multiplexer 57 an audio TS packet and a video TS packet, respectively, based on an audio PES input from the packetizing portion 52, a video PES input from the packetizing portion 54, and PSI/Aux information input from the PSI/Aux creating portion 55.

The multiplexer 57 multiplexes the audio TS packet and the video TS packet input from the TS converting portions 56a and 56b and outputs to a sync block converting portion 58 as a packet stream. The sync block converting portion 58 creates and outputs to the memory 33 a sync block of images for normal reproducing from the packet stream of the TS packets input from the multiplexer 57. The sync block of images for normal reproducing will be described later in detail.

The image data encoding portion 32 for variable-speed reproducing creates and outputs to the memory 33 a sync block of images for variable-speed reproducing for creating images for variable-speed reproducing, such as double speed reproducing and 8X speed reproducing, which is different from the normal reproducing speed.

A video ES input portion 71 of the image data encoding portion 32 for variable-speed reproducing processes and converts the input video PES input from the video encoder 53 of the image data encoding portion 31 for normal reproducing to a video ES. Then, the converted video ES is output to an Intra Code picture (I-picture) extracting portion 72. The I-picture extracting portion 72 omits predictive coded picture (P-picture) and bi-directionally predictive coded picture (B-picture) and only extracts I-picture from the video signals input by the video ES input portion 71 to a high-frequency component removing portion 73.

Here, the I-picture, P-picture, and B-picture will be described with reference to Fig. 5. According to MPEG2, image data is compressed so as to predict and create picture to be reproduced based on the previous and subsequent picture. In MPEG2, three types of picture including I-picture, P-picture and B-picture are used for predicting image data. I-picture is picture data, which includes an intra macro block and which can be reproduced independently. Therefore, if many pieces of I-picture exist, the encoding rate decreases.

P-picture is a forward, predictive encoded screen and is picture data predictive-encoded from I-picture or P-picture positioned in the past. Therefore, for an image in which an object moves within a screen, the P-picture can be encoded from I-picture. Thus, a higher encoding rate can be obtained.

The B-picture is a bi-directionally predictive encoded screen and is picture data which is predictive-encoded from the previous and subsequent picture by using I picture or P-picture positioned before and after in time. An image in which an object vanishes and/or appears can be displayed.

In this way, because only I-picture is image data, which can be reproduced independently, only I-picture is extracted for variable-speed reproducing. Thus, the image can be reproduced even by omitting the previous and subsequent P-picture and B-picture. Furthermore, because only I-picture is used, the amount of data can be reduced.

The high-frequency component removing portion 73 removes an AC coefficient indicating an active current component indicating a high frequency component of data obtained by encoding I-picture input from the I-picture extracting portion 72. Thus, the amount of data is reduced. Then, the data is output to the sync block converting portion 74. In other words, for example, I-picture data is compressed by discrete cosine transformation (DCT), the high frequency component removing portion 73 reduces the amount of data by reducing a number of effective AC coefficients. The amount of data removed by the high frequency component removing portion 73 is not determined uniquely. The amount can be defined based on the desired image quality and the recording capacity limitation on the recording medium 35. Because the number of AC coefficients are decreased in this way, the high-frequency component in the variable-speed reproducing mode is removed. Therefore, a blurred image is created by which the high-frequency component is not represented. However, the update rate of I-picture can be improved by the decreased amount of data for each piece of I-picture. Thus, an easy-to-see image can be constructed in total. The sync block converting portion 74 converts I-picture data, which is image data for variable-speed reproducing and from which a high-frequency component input from the high-frequency component removing portion 73 is removed, to a sync block for variable-speed reproducing and outputs to the memory 33. The image sync block for variable-speed reproducing will be described later in detail.

The memory 33 stores the image sync block for normal reproducing and image sync block for variable-speed reproducing input from the sync block converting portions 58 and 74 in an identifiable manner. The recording portion 34 is a mechanism for controlling a record head for recording data in the recording medium 35 having the magnetic tape 1, for example. The recording portion 34 records, in the recording medium 35, sync blocks as data for normal reproducing stored in the memory 33 sequentially. In addition, the recording portion 34'reads sync blocks as data for variable-speed reproducing and repeatedly records the sync blocks on tracks whose number is equal to the number of times corresponding to the speed rate of the running speed of the recording medium 35 in normal reproducing and in variable-speed reproducing. In other words, in a case of sync blocks for quadruple speed reproducing, the recording portion 34 repeatedly records sync blocks for the same one track of data for variable-speed reproducing on four of the tracks 11. Then, the recording portion 34 sequentially records data for normal reproducing in the other area, which is not for the data for variable-speed reproducing, on each of the tracks 11 (different data for normal reproducing is recorded in each track). The recording processing will be described later in detail.

Next, a reproduce system will be described. A reproducing portion 36 is a mechanism for controlling a reproducing head, not shown, for example. The reproducing portion 36 reads data recorded in the recording medium 35 and outputs sync blocks of image data for normal reproducing in the normal reproducing mode and sync blocks of image data for variable-speed reproducing in the variable-speed reproducing mode to the memory 37. Then, the memory 37 is caused to store the sync blocks. In the normal reproducing mode, the memory 37 outputs the sync blocks of the image data for normal reproducing, which are read by the reproducing portion 36, to an image data decoding portion 39 for normal reproducing through a switch 38. In the variable-speed reproducing mode, the memory 37 outputs the sync blocks of the image data for variable-speed reproducing to an image data decoding portion 40 for variable-speed reproducing through the switch 38. The switch 38 is switched between the normal reproducing mode and the variable-speed reproducing mode. In the normal reproducing mode, the switch 38 is connected to a terminal 38a. In the variable-speed reproducing mode, the switch 38 is connected to a terminal 38b.

The image data decoding portion 39 for normal reproducing decodes the sync blocks of the image data for normal reproducing, which are input by the memory 37. Then, the image data decoding portion 39 outputs video signals and audio signals compressed in MPEG 2 method to a display portion, not shown, and to a speaker, not shown, for example, through a video decoder 84 and an audio decoder 85, respectively. Then, the display portion displays the image, and the speaker outputs sounds.

A TS converting portion 81 of the image data decoding portion 39 for normal reproducing creates a TS from the input sync blocks of the image data for normal reproducing and outputs to a PSI analyzing portion 82. The PSI analyzing portion 82 analyzes PSI/AUX information of the input TS. Then, the PSI analyzing portion 82 outputs the analysis result and the TS to a demultiplexer 83. The multiplexer 83 separates the TS input by the PSI analyzing portion 82 into a video ES and an Audio ES and outputs to a video decoder 84 and an audio decoder 85, respectively. The video decoder 84 and the audio decoder 85 decode the input video ES and audio ES, respectively. Then, the video decoder 84 and the audio decoder 85 output the original video signals and the original audio signals, respectively.

The image data decoding portion 40 for variable-speed reproducing creates and outputs images for variable-speed reproducing from the sync blocks of the image data for variable-speed reproducing, which are input from the memory 37. Furthermore, the image data decoding portion 40 for variable-speed reproducing outputs a TS for variable-speed reproducing (also possibly for normal reproducing) even to a conventional external device, which can only reproduce TS's at a variable-speed. Thus, the images for variable-speed reproducing can be displayed.

An ES converting portion 91 of the image data decoding portion 40 for variable-speed reproducing creates a video ES from input sync blocks of image data for variable-speed reproducing. Then, the ES converting portion 91 outputs the video ES to a copy picture creating portion 92, a video decoder 93 and a presentation time stamp (PTS) creating portion 95.

The copy picture creating portion 92 copies and inserts I picture included in the input ES instead of the removed P picture and B-picture and outputs the ES to the decoder 93. The video decoder 93 creates image data for variable-speed reproducing based on the input ES and the copy picture (copied image data for variable-speed reproducing) input by the copy picture creating portion 92. Then, the video decoder 93 decodes the images for variable-speed reproducing to be displayed.

A program clock reference (PCR) creating portion 94 creates a PCR packet as timing information for reproducing, which is required for constructing the TS, based on a system clock internally included by the PTS creating portion 95. Then, the PCR creating portion 94 outputs the PCR packet to a TS creating portion 97. The PTS creating portion 95 self-contains the system clock as that for frame synchronizing signals for reproducing images compressed in MPEG 2 method. The PTS creating portion 95 detects time information in the ES and converts the detected time information to information on timing in synchronous with the system clock. Then, the PTS creating portion 95 creates a PTS. A PSI creating portion 96 creates and outputs a PSI required for constructing the TS to a TS creating portion 97. The TS creating portion 97 creates a TS of image data for variable-speed reproducing based on the PCR created by the PCR creating portion 94, the PTS and ES created by the PTS creating portion 95 and the PSI created by the PSI creating portion 96. Then, the TS creating portion 97 outputs the TS to an external apparatus.

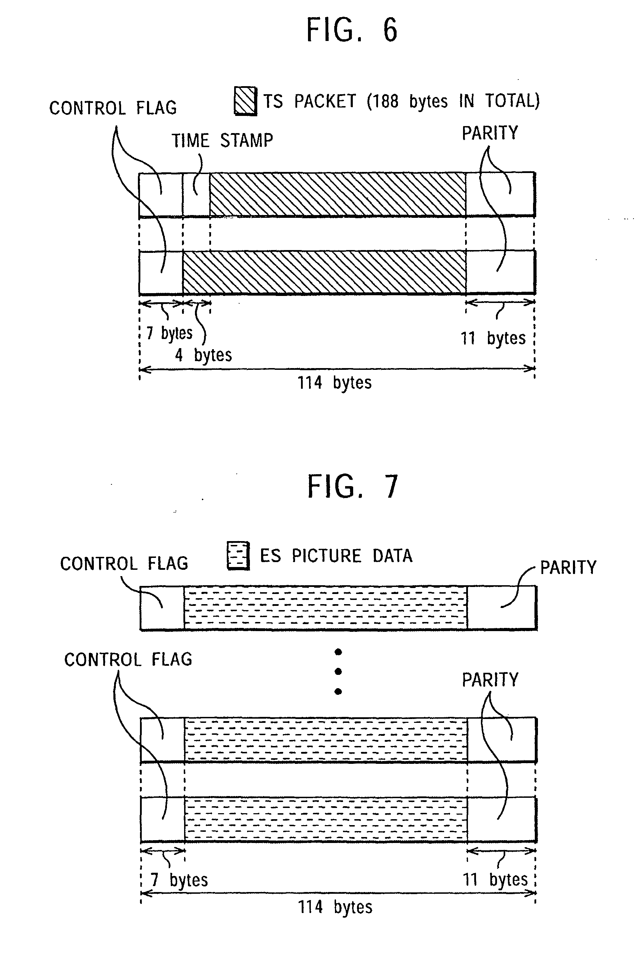

Next, constructions of a sync block of images for normal reproducing and a sync block of images for variable-speed reproducing will be described with reference to Figs. 6 and 7.

A sync block of images for normal reproducing includes a TS packet. Therefore, data for one TS packet includes two sync blocks each having the data length of 114 bytes. The TS packet is 188 bytes in total. Therefore, the sync block including the upper time stamp in Fig. 6 includes 92 bytes of 188 bytes constructing the TS packet. In addition to the TS packet, a control flag of 7 bytes is provided at the beginning. The control flag includes correction information, a track identification number and a sync block identification number. Time stamp information of 4 bytes is included therein next to the control flag. The time stamp information includes a PTS and a PCR. At the end, a parity of 11 bytes is included therein such as error correcting code (ECC). The lower sync block in Fig. 6 does not include a time stamp but includes a TS packet instead. That is, the sync block includes information for the TS packet of 96 bytes.

On the other hand, as shown in Fig. 7, a sync block of images for variable-speed reproducing includes an ES. Therefore, in addition to the control flag of 7 bytes at the beginning and a parity of 11 bytes at the end, ES data is stored in an area of 96 bytes. Furthermore, one or plural sync blocks are possible in accordance with the data length of the ES.

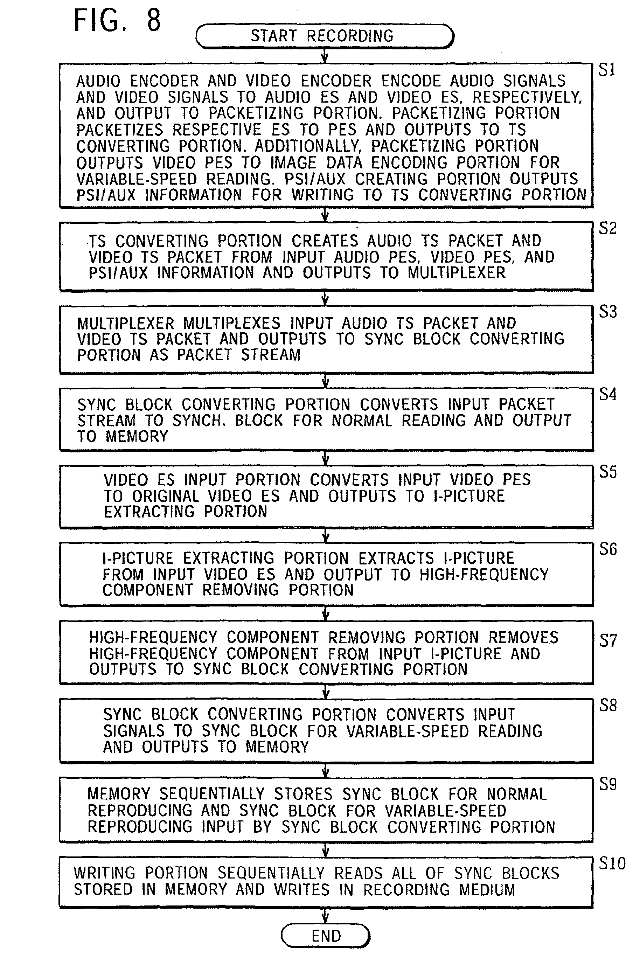

Next recording processing by the image recording/reproducing apparatus will be described with reference to a flowchart in Fig. 8.

At a step S1, the audio encoder 51 and the video encoder 52 encode input audio signals and video signals to an audio ES and a Video ES and output to the packetizing portions 52 and 54, respectively. The packetizing portions 52 and 54 packetizing the respective ES's to PES's and output to the TS converting portions 56a and 56b. The packetizing portion 54 outputs the video PES to the image data encoding portion 32 for variable-speed reproducing. Furthermore, the PSI/Aux creating portion 55 creates PSI/Aux information corresponding to the encoding and outputs to the TS converting portions 56a and 56b.

At a step S2, the TS converting portions 56a and 56b creates an audio TS packet and a video TS packet from the input audio PES, video PES and PSI/Aux information and output to the multiplexer 57.

At a step S3, the multiplexer 57 multiplexes the input audio TS packet and the video TS packet and output to the sync block converting portion 58 as a packet stream. At a step S4, the sync block converting portion 58 converts the packet stream of the input TS packet to a sync block of image data for normal reproducing and outputs to the memory 33.

At a step S5, a video ES input portion 61 converts the input video PES to the original video ES and outputs to the I-picture extracting portion 72. At a step S6, the I-picture extracting portion 72 only extracts I-picture data from the input video ES and outputs to the high-frequency component removing portion 73. At a step S7, the high-frequency component removing portion 73 removes a high-frequency (AC:high frequency) component from the input I-picture data. Thus, the amount of I-picture data is reduced. Then, the high-frequency component removing portion 73 outputs the I-picture data to the sync block converting portion 74. At a step S8, the sync block converting portion 74 outputs the input I-picture data to the memory 33 as the sync block of image data for variable-speed reproducing.

At a step S9, the memory 33 sequentially stores the sync block of the image data for normal reproducing and sync block of image data for variable-speed reproducing input by the sync block converting portions 58 and 64. At a step S10, the recording portion 34 sequentially reads and records in the recording medium 35 the sync block of image data for normal reproducing and sync block of image data for variable-speed reproducing stored in the memory 33.

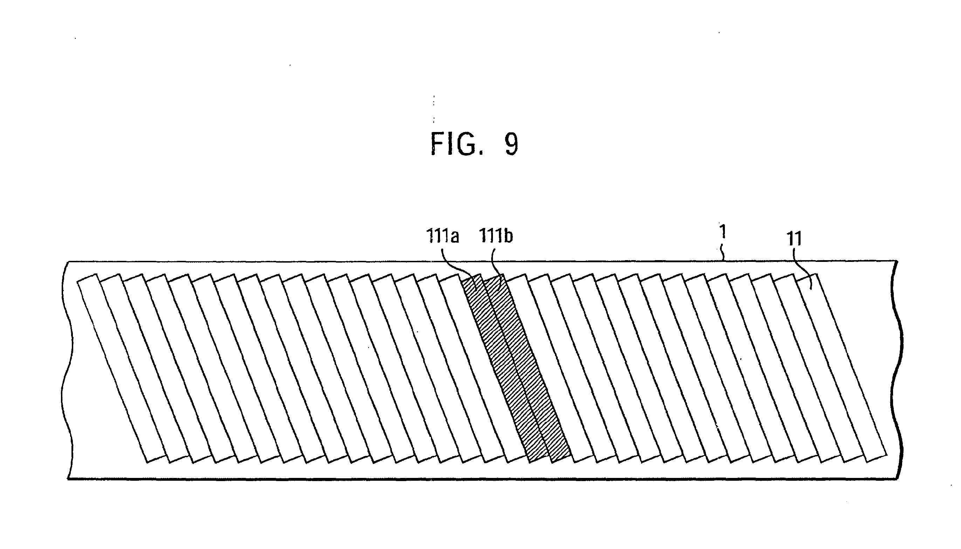

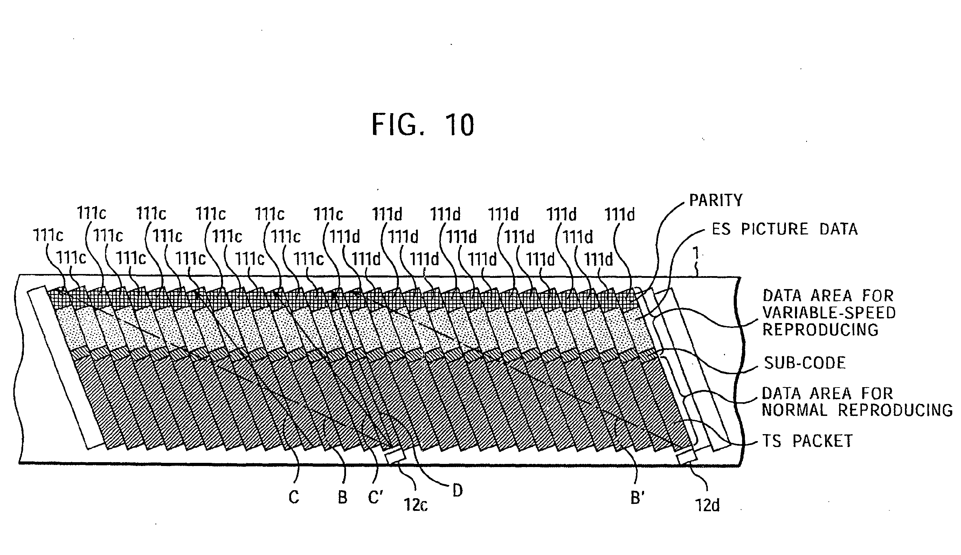

Data 111a and 111b conventionally recorded on the tracks 11 as shown in Fig. 9 are recorded by the recording portion 34 as shown in Fig. 10 when the maximum reproducing speed in the variable-speed reproducing mode is 15X speed as the normal reproducing speed. In other words, the data area for variable-speed reproducing (upper) and the data area for normal reproducing (lower) are provided in each of the tracks 11 divided in predetermined proportions from both ends. The shown highest parity area of image data for variable-speed reproducing of the data area for variable-speed reproducing includes 24 sync blocks and is used as ECC for reading the image data for variable-speed reproducing. An ES picture data area exists below the parity area. 18 sync blocks of the image data for variable-speed reproducing shown in Fig. 7 are recorded in the ES picture data area. Furthermore, sub-code is recorded therebelow and includes five sync blocks. Control information relating to processing for data recorded in the data area for variable-speed reproducing is recorded in the sub-code.

The data area for normal reproducing includes 170 sync blocks. Sync blocks including TS packets shown in Fig. 6 are recorded in the data area in a normal recording method.

Data for variable-speed reproducing of entirely the same data 111a is recorded in the data area for variable-speed reproducing in 15 of the tracks 11, which are indicated as data 111c to be reproduced. Similarly, data for variable-speed reproducing of entirely the same data 111b is recorded in 15 of the tracks 11, which bare indicated as data 111d to be reproduced. On the other hand, image data for normal reproducing to be read sequentially is recorded continuously in the data area for normal reproducing.

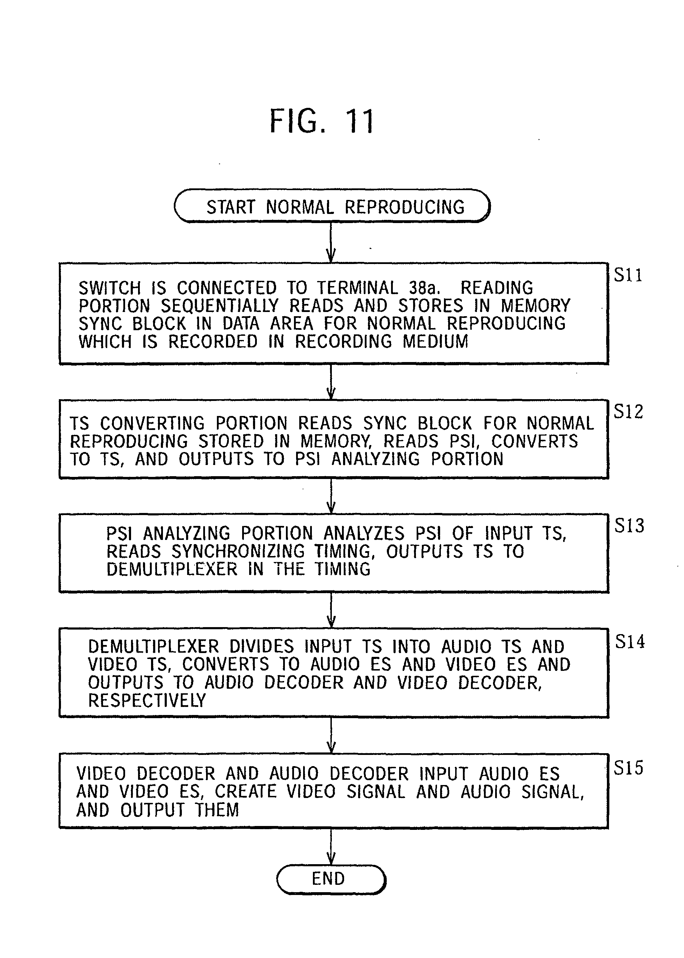

Next, processing for normal reproducing will be described with reference to a flowchart in Fig. 11.

At a step S11, the switch 38 is connected to the terminal 38a. The reproducing portion 36 reads each sync block on the data area for normal reproducing, which is recorded in the recording medium 35, for each of the tracks 11 sequentially. Then, the reproducing portion 36 stores the sync blocks in the memory 37. In other words, in the normal reproducing mode, the head 12c reads and records in the memory 37 only the data in the data area for normal reproducing among data stored in the tracks 11 by scanning the tracks 11 in a direction indicated by an arrow D in Fig. 10.

At a step S12, the TS converting portion reads the sync blocks for normal reproducing stored in the memory 37. The TS converting portion reads PSI, which is control information, from control flags of sync blocks and PCR's, which are time information, from time stamps of the sync blocks. The TS converting portion converts sync blocks input as TS packets to a TS and outputs to the PSI analyzing portion 82. At a step S13, the PSI analyzing portion 82 analyzes contents of the input PSI and identifies synchronization timing from the analysis result and the PCR. The PSI analyzing portion 82 converts the TS to an ES in the timing and outputs to the demultiplexer 83.

At a step S14, the demultiplexer 83 separates the input ES into an audio ES and a video ES and outputs them to the audio decoder 85 and the video decoder 84, respectively.

At a step S15, the video decoder 84 and the audio decoder 85 decode and output the input audio ES and video ES to video signals and audio signals, respectively. Thus, the output video signals and audio signals are processed differently, and images and sounds are output from a display and a speaker, not shown, respectively.

Through the above-described processing, the data recording area for normal reproducing is smaller than the normal recording area according to the above-described method. However, by changing the reproducing speed (running speed of the magnetic 1), an amount of data to be read by the head 12c in the normal reproducing mode can be changed in order to handle the smaller area.

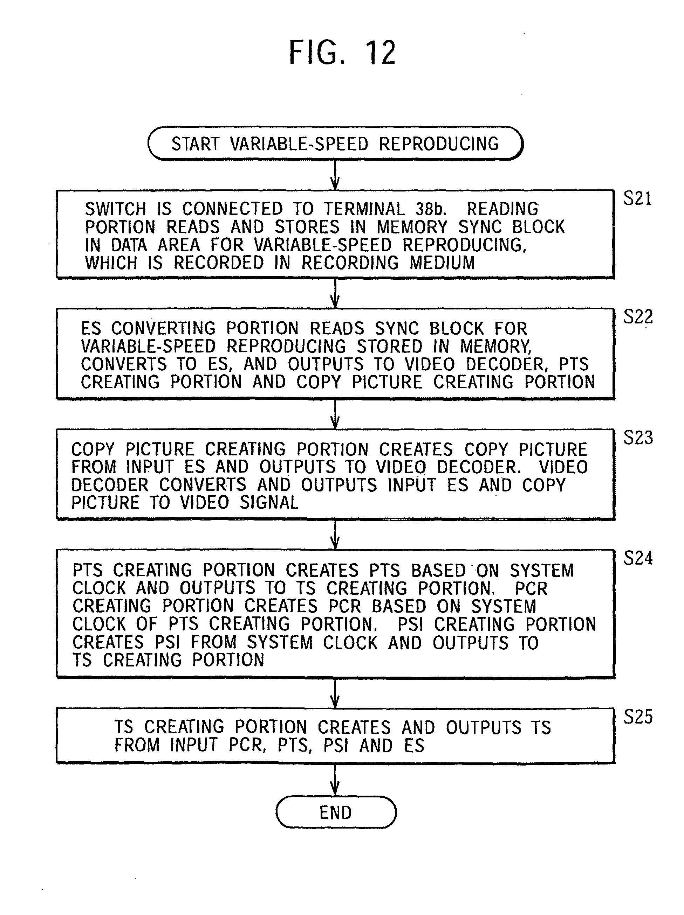

Next, processing for variable-speed reproducing will be described with reference to a flowchart in Fig. 12. At a step S21, the switch 38 is connected to the terminal 38b. The reproducing portion 36 sequentially reads sync blocks in the data area for variable-speed reproducing, which are recorded on the recording medium 35, for each of the tracks 11. The sync blocks are stored in the memory 37. In other words, in the variable-speed reproducing mode, the head 12c reads and records in the memory 37 sync blocks in the data area for variable-speed reproducing by moving in a direction indicated by an arrow B or B'.

At a step S22, the ES converting portion 91 reads out sync blocks for variable-speed reproducing stored in the memory 37. Then, the ES converting portion 91 converts the sync blocks to an ES and outputs to the video decoder 93, the PTS creating portion 95 and the copy picture 82.

At a step S23, the copy picture creating portion 92 creates a copy picture from the input ES and outputs to the video decoder 93. The video decoder 93 creates video signals for variable-speed reproducing from the ES input by the ES converting portion 91 and from the copy picture input by the copy picture creating portion 92. Then, the video decoder 93 outputs the video signals to a display in a later stage, not shown. In other words, the ES for the image data for variable-speed reproducing only includes I-picture. P-picture and B-picture, which originally exist, are omitted. Instead, I-picture is copied and is inserted to the ES. As a result, a normal number of pieces of picture are obtained.

At a step S24, the PTS creating portion 95 creates a PTS and outputs to the TS creating portion 97 along with the ES based on a system clock self-contained by the PTS creating portion 95. The PCR creating portion 94 creates a PCR based on the system clock of the PTS creating portion 95. The PSI creating portion 96 creates PSI based on the system clock of the PTS creating portion 95. The created PCR and PSI are output to the TS creating portion 97. At a step S25, the TS creating portion 97 creates a TS from the input PCR, PTS, PSI and ES and outputs to an external apparatus, not shown.

In other words, the data in the data area for variable-speed reproducing is all the same within the data 111c to be reproduced. Therefore, data for variable-speed reproducing to be recorded on one of the tracks 11 can be read surely even when the head 12c in Fig. 10 scans the tracks 11 by straddling plural of the tracks 11, which are adjacent to each other, in the direction indicated by an arrow B. In the data for variable-speed reproducing, the same data is recorded at predetermined intervals (every ten sets of 15 tracks in Fig. 10). Therefore, for example, starting timing for reading the data by the head 12c does not have to be adjusted. Information indicating timing, for example, does not have to be recorded in the sub-code in the data area for variable-speed reproducing. As a result, the amount of image data for variable-speed reproducing can be reduced.

Furthermore, as shown in Fig. 10, by achieving a construction providing for the maximum 15X speed (by achieving a construction in which the same data is recorded in 15 of the tracks 11), the reproducing at 15X speed or lower can be performed in a stable manner. For example, as shown in Fig. 10, even when the head 12c scans in the direction indicated by the arrow C or C' for reproducing at quadruple speed, an image for variable-speed reproducing in the data recording area for variable-speed reproducing at the scanning position can be scanned accurately. Here, the head 12c reads the same data plural times. However, in this case, when the same sync block is recorded on the memory 37 based on control flag information, overwrite processing is performed such that the plural pieces of data of the same sync block can be controlled not to be recorded.

The TS output from the TS creating portion 97 can be output to an external apparatus, not shown, such that image data, which can be reproduced at a normal speed, can be output by a conventional record/reproduce apparatus. Thus, not only the normal reproducing processing but also the variable-speed reproducing processing can be implemented by using the output TS in the conventional method.

As shown in Fig. 10, in the above-described example, the data area for variable-speed reproducing is recorded above while the data area for normal reproducing is recorded below. However, the positioning is not limited to the construction and may be reversed vertically. Only the data area for variable-speed reproducing needs to be positioned at the same position on the track 11. Thus, data for variable-speed reproducing can be read out without controlling timing. Therefore, the data area for variable-speed reproducing may be positioned near the substantial center of each of the tracks 11.

In this way, the variable-speed reproducing processing can be performed without controlling timing of the variable-speed reproducing processing. The amount of image data for variable-speed reproducing can be reduced.

The series of processing can be implemented by hardware and can be also implemented by software. When the series of processing can be implemented by software, programs included in the software is installed from a program storage medium into a computer built in specific hardware, or a generic personal computer, which can implement different kinds of functions by installing different kinds of programs therein.

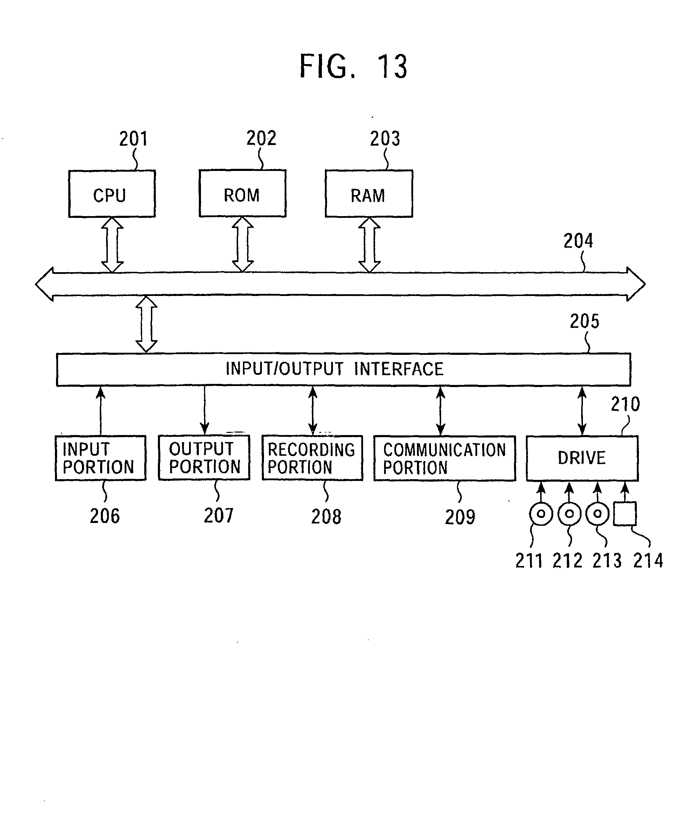

Fig. 13 shows an embodiment of a personal computer used for implementing the image recording/reproducing apparatus by software. A CPU 201 of a personal computer controls entire operations of the personal computer. When an instruction is input by a user from an input portion 206, such as a keyboard and a mouse, through a bus 204 and an input/output interface 205, the CPU 201 performs a program stored in a read-only memory (ROM) 201 in accordance with the instruction. Alternatively, the CPU 201 loads to a random access memory (RAM) 203 and performs a program read from a magnetic disk 211, optical disk 212, magneto-optical disk 213 or semiconductor memory 214 connected to a drive 210 and installed to a recording portion 208. Thus, functions of the image processing apparatus are implemented by software. Furthermore, the CPU 201 controls a communication portion 209 to communicate with the outside and to exchange data.

The program storage medium storing programs may be a package medium, which is distributed for providing programs to users, separately from the computer, as shown in Fig. 13. The package medium may be the magnetic disk 211 (including a flexible disk), optical disk 212 (including compact disk-read only memory (CD-ROM)) and a digital versatile disk (DVD)), magneto-optical disk 213 (including mini-disk (MD)), or semiconductor memory 214, in which the programs are stored. Furthermore, the program storage medium may be a hard disk included in the ROM 202 or recording portion 208 in which programs are recorded. The hard disk is built in a computer in advance and is provided to users.

The steps of recording programs stored in a program storage medium herein include processing performed in time series in the described order. However, the processing may not be always performed in time series and may be performed in parallel or independently.

### Industrial Applicability

According to the present invention, variable-speed reproducing processing can be performed without controlling timing for the variable-speed reproducing processing. Furthermore, an amount of image data for variable-speed reproducing can be reduced.

## Claims

1. An image recording apparatus for recording image data on a recording tape medium, comprising:
data converting means for variable-speed reproducing for converting image data to be used for variable-speed reproducing of the image data to data for variable-speed reproducing;
storage means for storing data for variable-speed reproducing, which is converted by the data converting means for variable-speed reproducing;
reading means for sequentially reading data for variable-speed reproducing, which is stored by the storage means, by a predetermined unit; and
recording means for repeatedly recording data for variable-speed reproducing, which is sequentially read by the reading means, at a corresponding position of a predetermined number of tracks on the recording medium.

2. An image recording apparatus according to Claim 1, wherein the image data is image data compressed in MPEG2 method.

3. An image recording apparatus according to Claim 2, wherein data converting means for variable-speed reproducing only converts I-picture image data of the image data to data for variable speed reproducing.

4. An image recording apparatus according to Claim 3, wherein the data converting means for variable-speed reproducing converts I-picture image data of the image data compressed in the MPEG 2 method to data for variable-speed reproducing including a plurality of sync blocks corresponding to the data length.

5. An image recording apparatus according to Claim 1, wherein the recording means repeatedly records data for variable-speed reproducing read by the reading means by the predetermined unit at a corresponding position of a predetermined number of tracks on the recording medium in accordance with the speed rate of running speeds of the recording medium in the variable-speed reproducing mode and in the normal reproducing mode.

6. An image recording method for recording image data on a recording tape medium, comprising:
a data converting step for variable-speed reproducing for converting image data to be used for variable-speed reproducing of the image data to data for variable-speed reproducing;
a storage step for storing data for variable-speed reproducing, which is converted by the processing at the data converting step for variable-speed reproducing;
a reading step for sequentially reading data for variable-speed reproducing, which is stored by the processing at the storage step, by a predetermined unit; and
a recording step for repeatedly recording data for variable-speed reproducing, which is sequentially read by the processing at the reading step, by a predetermined unit at a corresponding position of a predetermined number of tracks on the recording medium.

7. A program storage medium for storing a computer-readable program for controlling an image recording apparatus for recording image data on a recording tape medium, comprising:
a data converting control step for variable-speed reproducing for controlling to convert image data to be used for variable-speed reproducing of the image data to data for variable-speed reproducing;
a storage control step for controlling to store data for variable-speed reproducing, which is converted by the processing at the data converting control step for variable-speed reproducing;
a reading control step for controlling to sequentially read data for variable-speed reproducing, which is stored by the processing at the storage control step, by a predetermined unit; and
a recording control step for controlling to repeatedly record data for variable-speed reproducing, which is sequentially read by the processing at the control at the reading control step, at a corresponding position of a predetermined number of tracks on the recording medium.

8. A program for causing a computer for controlling an image recording apparatus for recording image data on a recording tape medium to perform:
a data converting control step for variable-speed reproducing for controlling to convert image data to be used for variable-speed reproducing of the image data to data for variable-speed reproducing;
a storage control step for controlling to store data for variable-speed reproducing, which is converted by the processing at the data converting control step for variable-speed reproducing;
a reading control step for controlling to sequentially read data for variable-speed reproducing, which is stored by the storage step, by a predetermined unit; and
a recording control step for controlling to repeatedly record data for variable-speed reproducing, which is sequentially read by the reading control step, at a corresponding position of a predetermined number of tracks on the recording medium.

9. An image reproducing apparatus for reproducing image data including data for variable-speed reproducing, which is repeatedly recorded by a predetermined unit at a corresponding position of a predetermined number of tracks on a recording tape medium, comprising:
reading means for straddling a plurality of tracks and for reading the data for variable-speed reproducing, which is repeatedly recorded by a predetermined unit at a corresponding position of a predetermined number of tracks on the recording medium in a variable-speed reproducing mode;
image-for-variable-speed-reproducing creating means for creating an image for variable-speed reproducing from the data for variable-speed reproducing by the predetermined unit, which is read by the reading means; and
data-for-normal-reproducing creating means for creating image data, which can be normally reproduced, from the data for variable-speed reproducing, which is read by the reading means.

10. An image reproducing apparatus according to Claim 9, wherein the image data is image data compressed in MPEG2 method.

11. An image reproducing apparatus according to Claim 10, wherein the data for variable-speed reproducing is obtained by converting I-picture image data to be used for variable-speed reproducing of the image data to a plurality of sync blocks; and wherein the image-for-variable-speed-reproducing creating means creates the I-picture from the sync blocks of the data for variable-speed reproducing, which is read by the reading means, and creates an image for variable-speed reproducing from the I-picture.

12. An image reproducing apparatus according to Claim 11, further comprising:
copying means for copying and creating the I-picture as B-picture or P-picture,
wherein the image-for-variable-speed-reproducing creating means creates the I-picture from the sync blocks of the data for variable-speed reproducing, which is read by the reading means, and creates image data, which can be normally reproduced, at predetermined time intervals from the I-picture and the B-picture or P-picture copied by the copying means.

13. An image reproducing apparatus according to Claim 12, wherein the data-for-normal-reproducing creating means creates image data, which can be reproduced at a normal speed, by newly adding time information and/or control information.

14. An image reproducing method for an image reproducing apparatus for reproducing image data including data for variable-speed reproducing, which is repeatedly recorded by a predetermined unit at a corresponding position of a predetermined number of tracks on a recording tape medium, the method comprising:
a reading step for straddling a plurality of tracks and for reading the data for variable-speed reproducing, which is repeatedly recorded by a predetermined unit at a corresponding position of a predetermined number of tracks on the recording medium in a variable-speed reproducing mode;
an image-for-variable-speed-reproducing creating step for creating an image for variable-speed reproducing from the data for variable-speed reproducing by the predetermined unit, which is read by the processing at the reading step; and
a normally-reproducable-data creating step for creating image data, which can be normally reproduced, from the data for variable-speed reproducing, which is read by the processing at the reading step.

15. A program storage medium for storing a computer-readable program for controlling an image reproducing apparatus for reproducing image data including data for variable-speed reproducing, which is repeatedly recorded by a predetermined unit at a corresponding position of a predetermined number of tracks on a recording tape medium, the program comprising:
a reading control step for controlling to straddle a plurality of tracks and to read the data for variable-speed reproducing, which is repeatedly recorded by a predetermined unit at a corresponding position of a predetermined number of tracks on the recording medium in a variable-speed reproducing mode;
an image-for-variable-speed-reproducing creating control step for controlling to create an image for variable-speed reproducing from the data for variable-speed reproducing by the predetermined unit, which is read by the processing at the reading control step; and
a normally-reproducable-data creating control step for controlling to create image data, which can be reproduced at a normal speed, from the data for variable-speed reproducing, which is read by the processing at the reading control step.

16. A program for causing a computer for controlling an image reproducing apparatus for reproducing image data including data for variable-speed reproducing, which is repeatedly recorded by a predetermined unit at a corresponding position of a predetermined number of tracks on a recording tape medium, to perform:
a reading control step for controlling to straddle a plurality of tracks and to read the data for variable-speed reproducing, which is repeatedly recorded by a predetermined unit at a corresponding position of a predetermined number of tracks on the recording medium in a variable-speed reproducing mode;
an image-for-variable-speed-reproducing creating control step for controlling to create an image for variable-speed reproducing from the data for variable-speed reproducing by the predetermined unit, which is read by the processing at the reading control step; and
a normally-reproducable-data creating control step for controlling to create image data, which can be normally reproduced, from the data for variable-speed reproducing, which is read by the processing at the reading control step.

17. A magnetic tape for storing image data, comprising:
an image-data-for-normal-reproducing recording area for storing image data for normal reproducing of the image data at a corresponding position of each track; and
an image-data-for-variable-speed-reproducing recording area for storing image data for variable-speed reproducing of the image data at a corresponding position of each track,
wherein the image-data-for-normal-reproducing recording area and the image-data-for-variable-speed-reproducing recording area are positioned such that the track can be divided from the both ends in predetermined proportions;
wherein image data for normal reproducing is sequentially recorded at a corresponding position of the track in the image-data-for-normal-reproducing recording area; and
wherein image data for variable-speed reproducing is repeatedly recorded at a corresponding position of a predetermined number of tracks in the image-data-for-variable-speed-reproducing recording area.

## Amended claims

### Amended claims under Art. 19.1 PCT

**1.** (Amended) An image recording apparatus for recording image data on a recording tape medium, comprising:
first sync block converting means for converting image data to be used for normal reproducing of the image data to packet data including time information and control information and then to sync block data for normal reproducing;
data converting means for variable-speed reproducing for converting image data to be used for variable-speed reproducing of the image data to data for variable-speed reproducing;
second sync block converting means for converting the data for variable-speed reproducing to sync block data for variable speed reproducing;
storage means for storing the sync block data for normal reproducing and sync block data for variable-speed reproducing, which are converted by the first and second sync block converting means;
reading means for sequentially reading the sync block data for normal reproducing and sync block data for variable-speed reproducing, which are stored by the storage means; and
recording means for recording the sync block data for normal reproducing and sync block data for variable-speed reproducing, which are sequentially read by the reading means, at predetermined positions on the recording medium, respectively.

**2.** An image recording apparatus according to Claim 1, wherein the image data is image data compressed in MPEG2 method.

**3.** (Amended) An image recording apparatus according to Claim 2, wherein the data converting means for variable-speed reproducing only converts I-picture image data of the image data to data for variable speed reproducing.

**4.** (Amended) An image recording apparatus according to Claim 3, wherein the second sync block data converting means converts I-picture image data of the image data compressed in the MPEG 2 method to sync block data for variable-speed reproducing including a plurality of sync blocks corresponding to the data length.

**5.** (Amended) An image recording apparatus according to Claim 1, wherein the recording means repeatedly records sync block data for variable-speed reproducing read by the reading means at a corresponding position of a predetermined number of tracks on the recording medium in accordance with the speed rate of running speeds of the recording medium in the variable-speed reproducing mode and in the normal reproducing mode.

**6.** (Amended) An image recording method for recording image data on a recording tape medium, comprising:
a first sync block converting step for converting image data to be used for normal reproducing of the image data to packet data including time information and control information and then to sync block data for normal reproducing;
a data converting step for variable-speed reproducing for converting image data to be used for variable-speed reproducing of the image data to data for variable-speed reproducing;
a second sync block converting step for converting the data for variable-speed reproducing to sync block data for variable speed reproducing;
a storage step for storing the sync block data for normal reproducing and sync block data for variable-speed reproducing, which are converted by the processing at the first and second sync block converting steps;
a reading step for sequentially reading the sync block data for normal reproducing and sync block data for variable-speed reproducing, which are stored by the processing at the storage step; and
a recording step for recording the sync block data for normal reproducing and sync block data for variable-speed reproducing, which are sequentially read by the processing at the reading step, at predetermined positions on the recording medium, respectively.

**7.** (Amended) A program storage medium for storing a computer-readable program for controlling an image recording apparatus for recording image data on a recording tape medium, comprising:
a first sync block converting control step for controlling to convert image data to be used for normal reproducing of the image data to packet data including time information and control information and then to sync block data for normal reproducing;
a data converting control step for variable-speed reproducing for controlling to convert image data to be used for variable-speed reproducing of the image data to data for variable-speed reproducing;
a second sync block converting control step for controlling to convert the data for variable-speed reproducing to sync block data for variable speed reproducing;
a storage control step for controlling to store the sync block data for normal reproducing and sync block data for variable-speed reproducing, which are converted by the processing at the first and second sync block converting control steps;
a reading control step for controlling to sequentially read the sync block data for normal reproducing and sync block data for variable-speed reproducing, which are stored by the processing at the storage control step; and
a recording control step for controlling to record the sync block data for normal reproducing and sync block data for variable-speed reproducing, which are sequentially read by the processing at the reading control step, at predetermined positions on the recording medium, respectively.

**8.** (Amended) A program for causing a computer for controlling an image recording apparatus for recording image data on a recording tape medium to perform:
a first sync block converting control step for controlling to convert image data to be used for normal reproducing of the image data to packet data including time information and control information and then to sync block data for normal reproducing;
a data converting control step for variable-speed reproducing for controlling to convert image data to be used for variable-speed reproducing of the image data to data for variable-speed reproducing;
a second sync block converting control step for controlling to convert the data for variable-speed reproducing to sync block data for variable speed reproducing;
a storage control step for controlling to store the sync block data for normal reproducing and sync block data for variable-speed reproducing, which are converted by the processing at the first and second sync block converting control steps;
a reading control step for controlling to sequentially read the sync block data for normal reproducing and sync block data for variable-speed reproducing, which are stored by the processing at the storage control step; and
a recording control step for controlling to record the sync block data for normal reproducing and sync block data for variable-speed reproducing, which are sequentially read by the processing at the reading control step, at predetermined positions on the recording medium, respectively.

**9.** (Amended) An image reproducing apparatus for reproducing image data including data for variable-speed reproducing, which is repeatedly recorded by a predetermined unit at a corresponding position of a predetermined number of tracks on a recording tape medium, comprising:
reading means for straddling a plurality of tracks and for reading the data for variable-speed reproducing, which is repeatedly recorded by a predetermined unit at a corresponding position of a predetermined number of tracks on the recording medium in a variable-speed reproducing mode;
image-for-variable-speed-reproducing creating means for creating an image for variable-speed reproducing from the data for variable-speed reproducing by the predetermined unit, which is read by the reading means; and
normally-reproducable data creating means for creating image data, which can be normally reproduced, from the data for variable-speed reproducing, which is read by the reading means, by newly generating and adding time information and control information.

**10.** An image reproducing apparatus according to Claim 9, wherein the image data is image data compressed in MPEG2 method.

**11.** An image reproducing apparatus according to Claim 10, wherein the data for variable-speed reproducing is obtained by converting I-picture image data to be used for variable-speed reproducing of the image data to a plurality of sync blocks; and wherein the image-for-variable-speed-reproducing creating means creates the I-picture from the sync blocks of the data for variable-speed reproducing, which is read by the reading means, and creates an image for variable-speed reproducing from the I-picture.

**12.** An image reproducing apparatus according to Claim 11, further comprising:
copying means for copying and creating the I-picture as B-picture or P-picture,
wherein the image-for-variable-speed-reproducing creating means creates the I-picture from the sync blocks of the data for variable-speed reproducing, which is read by the reading means and creates image data, which can be normally reproduced, at predetermined time intervals from the I-picture and the B-picture or P-picture copied by the copying means.

**13.** (Deleted)

**14.** (Amended) An image reproducing method for an image reproducing apparatus for reproducing image data including data for variable-speed reproducing, which is repeatedly recorded by a predetermined unit at a corresponding position of a predetermined number of tracks on a recording tape medium, the method comprising:
a reading step for straddling a plurality of tracks and for reading the data for variable-speed reproducing, which is repeatedly recorded by a predetermined unit at a corresponding position of a predetermined number of tracks on the recording medium in a variable-speed reproducing mode;
an image-for-variable-speed-reproducing creating step for creating an image for variable-speed reproducing from the data for variable-speed reproducing by the predetermined unit, which is read by the processing at the reading step; and
a normally-reproducable-data creating step for creating image data, which can be normally reproduced, from the data for variable-speed reproducing, which is read by the processing at the reading step, by newly generating and adding time information and control information.

**15.** (Amended) A program storage medium for storing a computer-readable program for controlling an image reproducing apparatus for reproducing image data including data for variable-speed reproducing, which is repeatedly recorded by a predetermined unit at a corresponding position of a predetermined number of tracks on a recording tape medium, the program comprising:
a reading control step for controlling to straddle a plurality of tracks and to read the data for variable-speed reproducing, which is repeatedly recorded by a predetermined unit at a corresponding position of a predetermined number of tracks on the recording medium in a variable-speed reproducing mode;
an image-for-variable-speed-reproducing creating control step for controlling to create an image for variable-speed reproducing from the data for variable-speed reproducing by the predetermined unit, which is read by the processing at the reading control step; and
a normally-reproducable-data creating control step for controlling to create image data, which can be reproduced at a normal speed, from the data for variable-speed reproducing, which is read by the processing at the reading control step, by newly generating and adding time information and control information.

**16.** (Amended) A program for causing a computer for controlling an image reproducing apparatus for reproducing image data including data for variable-speed reproducing, which is repeatedly recorded by a predetermined unit at a corresponding position of a predetermined number of tracks on a recording tape medium, to perform:
a reading control step for controlling to straddle a plurality of tracks and to read the data for variable-speed reproducing, which is repeatedly recorded by a predetermined unit at a corresponding position of a predetermined number of tracks on the recording medium in a variable-speed reproducing mode;
an image-for-variable-speed-reproducing creating control step for controlling to create an image for variable-speed reproducing from the data for variable-speed reproducing by the predetermined unit, which is read by the processing at the reading control step; and
a normally-reproducable-data creating control step for controlling to create image data, which can be normally reproduced, from the data for variable-speed reproducing, which is read by the processing at the reading control step, by newly generating and adding time information and control information.

**17.** (Amended) A magnetic tape for storing image data, comprising:
an image-data-for-normal-reproducing recording area for converting image data for normal reproducing of the image data to packet data including time information and control information and then to sync block data for normal reproducing and for storing the sync block data for normal reproducing at a corresponding position of each track; and
an image-data-for-variable-speed-reproducing recording area for converting image data for variable-speed reproducing of the image data to sync block data for variable-speed reproducing and for storing the sync block data for variable-speed reproducing at a corresponding position of each track,
wherein the image-data-for-normal-reproducing recording area and the image-data-for-variable-speed-reproducing recording area are positioned such that the track can be divided from the both ends in predetermined proportions;
wherein image data for normal reproducing is sequentially recorded at a corresponding position of the track in the image-data-for-normal-reproducing recording area; and
wherein image data for variable-speed reproducing is repeatedly recorded at a corresponding position of a predetermined number of tracks in the image-data-for-variable-speed-reproducing recording area.

Statement under Art. 19.1 PCT
Claims 1 and 4 to 8 were clarified in that image data to be used for normal reproducing was converted to packet data including time information and control information and then to sync block data for normal'reproducing. Furthermore, Claims 1 and 4 to 8 were clarified in that image data to be used for variable-speed reproducing was converted to image data for variable-speed reproducing and then to sync block data for variable-speed reproducing.

Claim 3 was clarified in that image data for variable-speed reproducing is the one described before.

Claims 9 and 14 to 16 were clarified in that normally-reproducable image data could be created by newly generating and adding time information and control information.

Claim 17 was clarified in that image data to be used for normal reproducing was recorded after being converted to packet data including time information and control information and then to sync block data for normal reproducing. Furthermore, Claim 17 was clarified in that image data to be used for variable-speed reproducing was recorded after being converted to image data for variable-speed reproducing and then to sync block data for variable speed reproducing.

According to the present invention, variable-speed reproducing processing can be performed without controlling timing for the variable-speed reproducing processing. Furthermore, an amount of image data for variable-speed reproducing can be reduced.
